Europäisches Patentamt

European Patent Office

Office européen des brevets

(19)

(11) **EP 1 416 734 B1**

(12) **EUROPEAN PATENT SPECIFICATION**

(45) Date of publication and mention
of the grant of the patent:
**26.10.2005 Bulletin 2005/43**

(51) Int Cl.$^7$: **H04N 7/18**, G08B 13/194

(21) Application number: **03013858.0**

(22) Date of filing: **18.06.2003**

(54) **Event detection for video surveillance systems using transform coefficients of compressed images**

Ereignisdetektion für Videoüberwachungssysteme unter Zuhilfenahme der Transformationskoeffizienten komprimierter Bilder

Détection d'événement pour des systèmes de surveillance vidéo utilisant des coefficients de transformation d'images comprimées

(84) Designated Contracting States:
**DE GB**

(30) Priority: **30.10.2002 US 284698**

(43) Date of publication of application:
**06.05.2004 Bulletin 2004/19**

(73) Proprietor: **Agilent Technologies, Inc.
Palo Alto, CA 94306-2024 (US)**

(72) Inventors:
• **Kakarala, Ramakrishna
Santa Clara, CA 95051 (US)**

• **Tibbs, Kevin W.
Campbell, CA 95088 (US)**
• **Vook, Dietrich
Los Altos, CA 94022 (US)**

(74) Representative: **Liesegang, Roland
FORRESTER & BOEHMERT
Pettenkoferstrasse 20-22
80336 München (DE)**

(56) References cited:
**EP-A- 1 022 667        EP-A- 1 173 020
FR-A- 2 770 724        US-A- 5 099 322**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

**BACKGROUND OF THE INVENTION**

Technical Field of the Invention

The present invention relates generally to video surveillance systems, and specifically to event detection using digital images produced by video surveillance systems.

Description of Related Art

Video surveillance systems that transmit an image to a monitoring center only when an event is detected, such as the appearance of an intruder, a malfunction, or a fire, utilize an algorithm for determining when a significant change occurs between the current digital image and a stored reference. For example, the algorithm can compare the pixel values of the current digital image with the pixel values of a stored reference digital image, and detect and report an event when the pixel values between the current digital image and the stored reference digital image significantly differ.

Typically, the stored reference is either a full digital image taken at a prior time or a set of statistics summarizing a prior digital image. When using a prior full image as a stored reference, event detection may be based on either ratios or differences of pixel values with the current image. For example, as described in Durucan and Ebrahimi, "Change Detection and Background Extraction by Linear Algebra," *Proceedings of the IEEE,* Vol. 89, No. 10, pp. 1368-1381 (2001), which is hereby incorporated by reference, a change in a current image is detected based on a vector model of the current image as compared to the vector model of a prior image. However, one drawback of storing a full prior image (or even only the luminance portion of a color image) is that it requires a significant amount of storage.

EP 1 173 020 discloses image processing system and method for use in a video surveillance system in which low-level features are extracted from a compressed digital video signal, the low-level features are encoded as content descriptors and security events are detected from the content descriptors. A demultiplexer, a memory unit, a memory controller, a front-end parser, and a symbol processor are used for feature extraction. Further, an address generator, an inverse DCT, a motion compensator, and a display processor are used for image reconstruction and display. These latter components of the second stage can be turned off so that all of the memory bandwidths and processing priority are dedicated to feature extraction at the first stage of decoding. The feature extraction unit performs dynamic feature extraction. Low-level data, including motion vector information, DCT coefficients and shape information are passed from the symbol processor to the feature extraction unit.

EP 1 022 667 describes a method of feature extraction from compressed video sequences. The spatio-temporal compression complexity is evaluated for feature extraction by inspecting the compressed bit stream and the complexity is used as a descriptor of the spatio-temporal characteristics of the video sequence. The spatio-temporal compression complexity measure is used as a matching criterium and can be used for absolute indexing.

EP 2 770 724 merely describes to compare a current video image and a reference image by subtraction. The result of the subtraction is then transformed to obtain a transformed image representative of the differences between the current image and the reference image.

In other video surveillance systems, various types of image statistics, such as mean, variance and histogram statistics, are used as the stored reference to represent an image taken at a prior time. These statistics can be collected either over the whole image or over a hot zone specified by the user that covers a region of interest within the image to be monitored for events. However, one drawback of using image statistics is that, in many cases, image statistics do not provide a sufficient description of the prior appearance of a scene, and therefore either cause false alarms to be triggered or fail to trigger alarms when necessary. For example, when using a histogram, if an object has moved within a current image as compared to a prior image, there is no way to determine where in the current image the change has occurred.

Therefore, what is needed is an event detection algorithm for use in video surveillance systems that utilizes a stored reference that is sufficiently descriptive to reduce false alarms, and yet requires only a compact storage in order to reduce system cost.

**SUMMARY OF THE INVENTION**

The present invention provides an image processing system to be used in a video surveillance system according to claim 1 and a method for detecting an event within a current image according to claim 6.

The present invention provides a system and method for event detection for video surveillance systems using transform coefficients representing a compressed prior image. For example, the compressed prior image can be a JPEG compressed image or another type of compressed image. Embodiments of the present invention compute transform coefficients for a current digital image. The transform coefficients of the current digital image are compared to the transform coefficients representing the compressed prior image, and a determination is made whether a change has occurred sufficient to cause the detection of an event.

In one embodiment, one or more threshold amounts are used to measure the amount of change required for an event to be detected. For example, if a difference value between the transform coefficients of the current image and the transform coefficients of the stored reference exceed a difference threshold amount, an event is detected. The transform coefficients can further be weighted in significance, depending on the application, to emphasize frequencies vertically, horizontally or diagonally.

In other embodiments, the current digital image is partitioned into non-overlapping blocks, and the transform coefficients are computed for each block. If the difference value between the transform coefficients of one block and the transform coefficients of the same block in the stored reference exceeds the difference threshold amount for that block, the entire block is labeled as a changed block. An event is detected if the number of changed blocks exceeds a block threshold amount.

In further embodiments, a hot zone can be specified in the current image. In this embodiment, only the transform coefficients of the blocks within the hot zone are compared to the corresponding blocks of the stored reference for event detection. In other embodiments, the blocks of the whole image or only within the hot zone can be weighted in significance to allow for large changes to be detected in less important areas and small changes to be detected in more important areas. For example, the difference threshold amount for determining whether a change in a particular block rises to the level of an event can be dynamically set per block based on the significance of the block.

In still further embodiments, the stored reference includes a combination of transform coefficients from two or more prior images in order to adapt to gradual scene content changes. For example, the combination of transform coefficients in the stored reference image can be a weighted average of all previous adapted reference images, with the weights favoring the most recent. Therefore, with each new image, the older image data drops in significance.

Advantageously, using transform coefficients of a prior compressed image provides a sufficient basis for event detection without requiring a large amount of reference data to be stored. For example, a typical JPEG compressed image requires only about one-twentieth of the amount of memory necessary for storing a full uncompressed image. By selecting particular blocks and particular coefficients, the amount of memory required can be further reduced. Furthermore, the invention provides embodiments with other features and advantages in addition to or in lieu of those discussed above. Many of these features and advantages are apparent from the description below with reference to the following drawings.

## BRIEF DESCRIPTION OF THE DRAWINGS

The disclosed invention will be described with reference to the accompanying drawings, which show important sample embodiments of the invention and which are incorporated in the specification hereof by reference, wherein:

FIG. 1 is an overview of a video surveillance system;

FIG. 2 is a block diagram illustrating the operation of a video surveillance system;

FIG. 3 is a block diagram illustrating exemplary logic for implementing an event detection algorithm for use in a video surveillance system, in accordance with embodiments of the present invention;

FIG. 4 is a flow chart illustrating exemplary steps of the event detection method of the present invention;

FIG. 5 illustrates a sample digital image divided into blocks for processing, in accordance with embodiments of the present invention;

FIG. 6 illustrates the transformation of sensor values into transform coefficients, in accordance with embodiments of the present invention;

FIGs. 7A and 7B are flow charts illustrating exemplary steps for detecting events using blocks of a digital image, in accordance with embodiments of the present invention;

FIGs. 8A-8D are views of a scene showing the detection of events in the scene using blocks of digital images of the scene;

FIG. 9 illustrates a sample digital image divided into blocks of a hot zone for processing, in accordance with embodiments of the present invention;

FIGs. 10A and 10B are flow charts illustrating exemplary steps for detecting events using blocks in a hot zone of a digital image, in accordance with embodiments of the present invention;

FIG. 11 is a flow chart illustrating exemplary steps for detecting events using weighted blocks of a digital image, in accordance with embodiments of the present invention;

FIG. 12 is a block diagram illustrating exemplary logic for adapting the reference image for use by the event detection algorithm of the present invention; and

FIG. 13 is a flow chart illustrating exemplary steps for adapting the reference image, in accordance with embodiments of the present invention.

**DETAILED DESCRIPTION OF EXEMPLARY EMBODIMENTS**

The numerous innovative teachings of the present application will be described with particular reference to exemplary embodiments. However, it should be understood that these embodiments provide only a few examples of the many advantageous uses of the innovative teachings herein. In general, statements made in the specification do not necessarily delimit any of the various claimed inventions. Moreover, some statements may apply to some inventive features, but not to others.

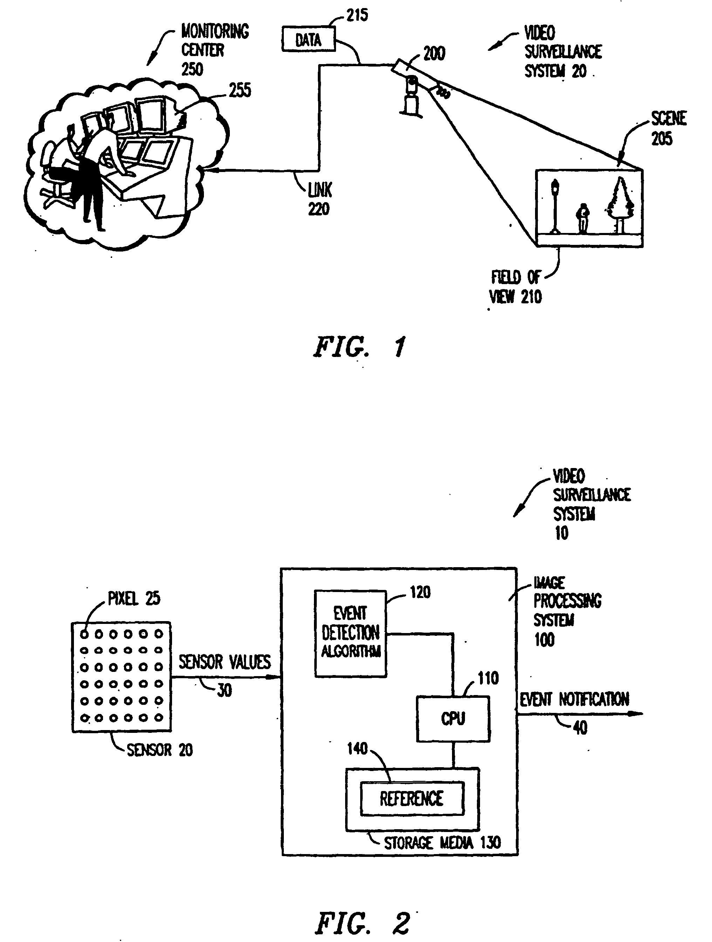

A video surveillance system 10 of the type that can be used in embodiments of the present invention is illustrated in FIG. 1. The video surveillance system 10 uses a video camera 200 or other type of imaging sensor device to monitor the activity of targets in a scene 205. For example, by way of illustration, and not limitation, the imaging sensor device can be a CCTV camera, long-wave infrared sensor or omnidirectional video. The scene 205 that the video surveillance system 10 monitors depends on a field-of-view 210 of the video camera 200, which is determined, in part, by the type of lens that the video camera 200 employs. For example, the lens can be a wide angle lens, capturing up to a 180 degree field-of-view, or a regular lens, capturing up to a 120 degree field-of-view. The field-of-view 210 of the video camera 200 can also depend on the application of the video surveillance system 10. Such applications can include, for example, tracking moving objects indoor or outdoor, analyzing cloud motion, monitoring crop growth, analyzing traffic flow or robotic applications.

The video camera 200 captures an image of the scene 205 within the field-of-view 210 of the camera 200 and transmits data 215 related to that image to a monitoring center 250. For example, the data 215 can include the whole image or only a portion of the image. Images can be taken periodically or at video frame rates, depending on the application of the video surveillance system 10. The video camera 200 can transmit the data 205 to the monitoring center 250 upon detection of an event within the current image (e.g., a change within the current image as compared to a reference) or each image can be transmitted to the monitoring center 250 for event detection purposes. The data 215 is transmitted to the monitoring center 250 via a link 220 between the video camera 200 and the monitoring center 250. The link 220 can include any transmission medium, such as, for example, coaxial cable, fiber optic link, twisted wire pair, air interface, satellite link or direct interface between the video camera 200 and monitoring center 250.

The data 215 received at the monitoring center 250 is processed in accordance with the specific application of the video surveillance system 10. For example, in one embodiment, the monitoring center 250 would include a computer 255 capable of processing the data, displaying a picture in response to the data and producing a report related to the data 215. The computer 255 could be a personal computer, server or other type of programmable processing device. The monitoring center 250 can be physically located in a separate facility from the video camera 200 or within the same facility as the video camera 200, depending upon the particular application. In other embodiments, the monitoring center 250 can be represented by an e-mail alert or other signaling method (e.g., paging) that is sent from the camera 200 to a designated party.

Referring now to FIG. 2, the operation of the video surveillance system 10 in accordance with embodiments of the invention is illustrated. The video surveillance system 10 includes a digital image sensor 20, such as a CMOS sensor chip or a CCD sensor chip, which includes a two-dimensional array of pixels 25 arranged in rows and columns. The digital image sensor 20 may be a black and white sensor or a color sensor. If the latter, the digital image sensor 20 may be covered by a color filter array (CFA), such that each pixel 25 senses only one color. For example, the CFA can be the popular Bayer CFA as described in U.S. Patent No. 3,971,065, which is hereby incorporated by reference, in which chrominance colors (e.g., red and blue) are interspersed amongst a checkerboard pattern of luminance colors (e.g., green).

The digital image sensor 20 provides raw sensor values 30 representing a current image to an image processing system 100, which applies an event detection algorithm 120 to the sensor values 30 in order to detect changes within the current image. A storage medium 130 within the image processing system 100 stores a reference 140 for comparison with the current image. In accordance with embodiments of the present invention, the reference 140 includes selected transform coefficients of a compressed prior image, such as a JPEG compressed image or another type of compressed image. The selected transform coefficients can include all transform coefficients of a compressed image or any certain transform coefficients. The storage medium 130 can be any type of computer-readable medium, e.g., a ZIP® drive, floppy disk, hard drive, CD-ROM, non-volatile memory device, tape or any other type of data storage device.

A Central Processing Unit (CPU) 110 controls the receipt of sensor values 30 and the application of the event detection algorithm 120 to the received sensor values 30 in order to compare the received sensor values 30 to the stored reference 140 to determine whether an event has occurred. The CPU 110 may be any microprocessor or microcontroller configured to load and/or run the event detection algorithm 120 and access the storage medium 130.

Upon the detection of an event, the image processing system 100 further transmits an event notification 40 to the monitoring center 250 (shown in FIG. 1). The image processing system 100 can be embodied within the monitoring center of FIG. 1, within the video camera 200 of FIG. 1 or within a portion of both the monitoring center 250 and the video camera 200. In one embodiment, the event notification 40 includes the data 215 shown in FIG. 1 that is transmitted to the monitoring center 250. In other embodiments, the event notification 40 includes other data representing the current image, such as the whole image or a portion of the image focused on the event, a report generated in response to the event, a signal to monitoring personnel that an event has occurred or other information concerning the event.

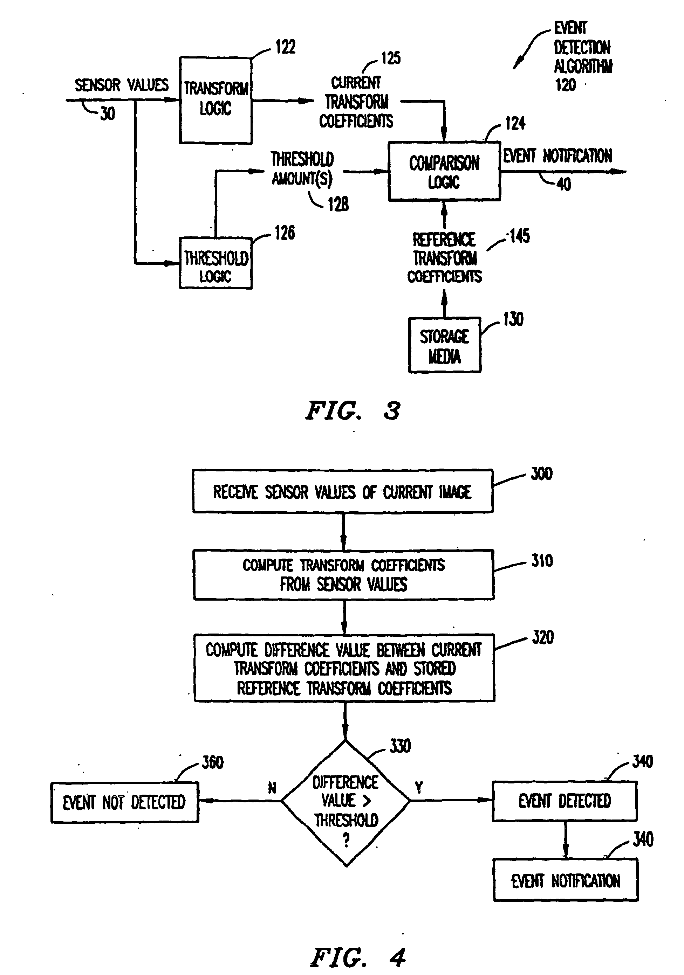

The operation of the event detection algorithm 120 is shown in FIG. 3. The event detection algorithm 120 is applied to the sensor values 30 produced by the digital image sensor 20 (shown in FIG. 2) to determine whether an event has occurred in the current digital image. To detect an event, transform logic 122 computes current transform coefficients 125 for a compressed version of the current image, using any separable image transform process, and provides the current transform coefficients 125 of the current image to comparison logic 124 for comparison with stored reference transform coefficients 145 related to a previous image retrieved from the storage medium 130. The reference transform coefficients 145 retrieved from the storage medium 130 for comparison purposes can include all of the reference transform coefficients stored in the reference 140 (shown in FIG. 2) or only certain ones of the reference transform coefficients stored in the reference, depending on the particular application. The comparison logic 124 determines whether the difference between the current transform coefficients 125 and the reference transform coefficients 145 exceeds one or more threshold amounts 128 provided by threshold logic 126, and if so, transmits an event notification 40. The difference between the current transform coefficients 125 and the reference transform coefficients 145 can be a difference value or a difference ratio. It should be understood that in the context of FIG. 3, and as used elsewhere below, the term "logic" refers to the hardware, software and/or firmware necessary for performing the function of the logic.

The threshold amounts 128 for determining whether the change in the current image is significant enough to indicate an event can be preset for all images or computed based on the sensor values 30 of the current image. For example, in low light conditions, sensor values 30 are typically low and the signal to noise ratio is low, thus requiring higher threshold amounts 128 for determining whether the difference between the current transform coefficients 125 and the reference transform coefficients 145 is significant enough to indicate an event has occurred. By contrast, in normal or bright light conditions, sensor values 30 are typically high and the signal to noise ratio is high, thereby enabling lower threshold amounts 128 to be set for determining whether the difference between the current transform coefficients 125 and the reference transform coefficients 145 is significant enough to indicate an event has occurred. Thus, in some embodiments, the threshold amounts 128 can be set during the manufacturing process, by an operator of the digital image system or using a table of values for the threshold amount based on light conditions, etc. In other embodiments, the threshold amounts 128 can be fixed or pre-configured based on the digital image sensor and CFA being used.

Exemplary steps within the event detection algorithm are shown in FIG. 4. Upon receiving the sensor values for the current digital image (step 300), the transform coefficients corresponding to a compressed version of the current image are computed (step 310) for comparison with a stored reference related to a previous image. A difference value between the current transform coefficients and the reference transform coefficients of the stored reference is calculated (step 320) to determine whether a change has occurred in the current image as compared with the previous image.

If the difference value exceeds a difference threshold amount (step 330), which can be pre-set based on the sensor, operator preference or CFA or variable depending on the light conditions of the image, the difference between the current image and the previous image is considered significant enough to indicate that an event has occurred in the current image (step 340). Upon the detection of an event, an event notification can be transmitted to provide data related to the event or the current image or otherwise inform monitoring personnel that an event has occurred (step 350). If the difference value does not exceed the difference threshold amount (step 330), no event is detected (step 360).

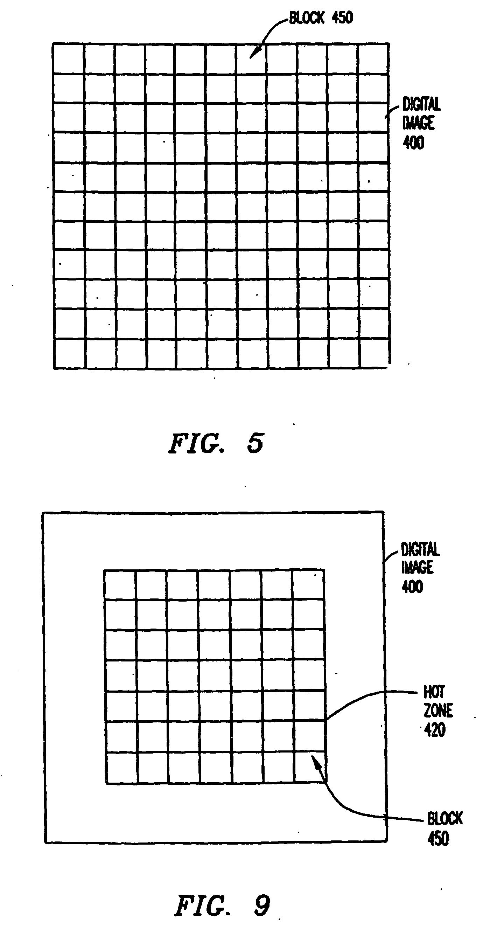

Depending on the particular application of the video surveillance system and the image transform process utilized, the sensor values can be divided into blocks or regions to compute the transform coefficients for each block and perform a comparison of the transform coefficients for each block. An example of a digital image 400 divided into blocks 450 in accordance with embodiments of the event detection algorithm of the present invention is shown in FIG. 5. Each block 450 includes a portion of sensor values that make up the digital image 400. When dividing the image 400 into blocks 450, event detection can occur based on changes within a single block 450 or changes over a number of blocks 450.

For example, in the JPEG image compression process, a digital image 400, which can be either a color image or a grayscale image, is sub-sampled before computing the discrete cosine transform (DCT) coefficients. For example, if the digital image 400 is a color image, the sensor values (e.g., R-G-B) are first transformed into a luminance-chrominance component image (Y-Cb-Cr) and the chrominance components are sub-sampled by a factor of 2 to take advantage of the relative insensitivity of the human visual system to detail in the chrominance space.

Following color-space transformation and sub-sampling, the luminance values are divided into non-overlapping 8 x 8 blocks 450, each containing sixty-four luminance values, and the chrominance values are divided into non-overlapping 8 x 8 blocks 450, each containing sixty-four sub-sampled chrominance values, to compute the discrete cosine transform (DCT) coefficients of each block 450. The DCT process maps data of the image 400 from the spatial domain to the frequency domain. For example, if the DCT coefficients of a given block 450 are designated $D(i,j)$ ($i$, $j=1,..,8$), the coefficient $D(1,1)$ is referred to as the DC coefficient and the remaining coefficients are referred to as the AC coefficients. The DC coefficient has zero frequency in both the $i$ and the $j$ dimensions, while the AC coefficients have increasing frequency as $i$ and $j$ increase.

Next, the DCT coefficients of the image 400 undergo quantization by dividing the DCT coefficients by corresponding entries in a known, fixed 8 x 8 quantization table and rounding the result. If the quantization values are denoted $Q(i,j)$, the quantization can be represented by: $Dq(i,j)=round[D(i,j)/Q(i,j)]$. The resulting quantized values $Dq(i,j)$ are coded into binary values using a table prescribed in the JPEG standard. For a further discussion of the JPEG standard, reference is made to: W. Pennebaker and J. Mitchell, "JPEG: Still Image Data Compression Standard," New York: Van Nostrand Reinhold, 1993, which is hereby incorporated by reference.

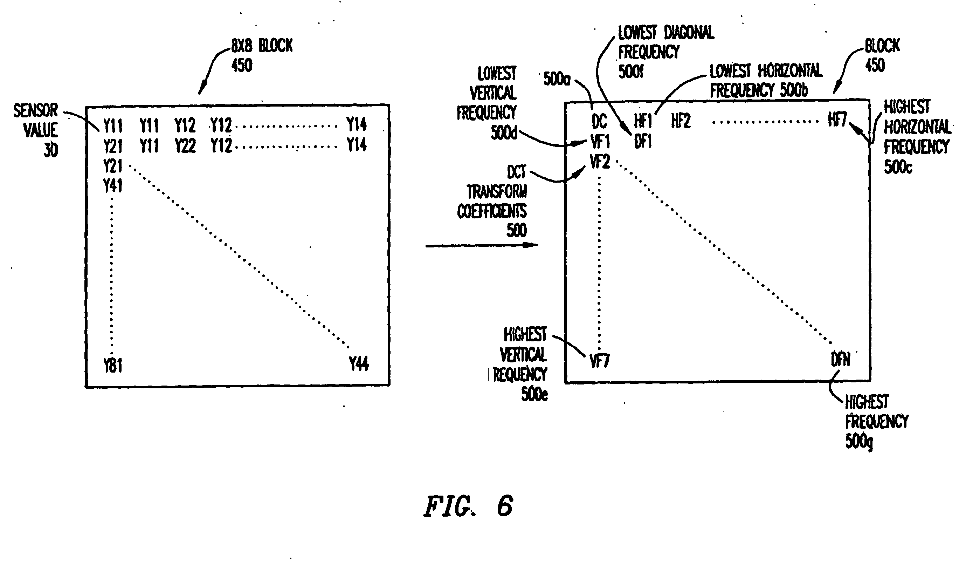

An example of an 8 x 8 block 450 of luminance (Y) values 35 and the associated coded DCT coefficients 500 for that 8 x 8 block 450 of Y values 35 are illustrated in FIG. 6. The coded DCT coefficients 500 are computed using all of the luminance values 35 in the block 450. The resulting block 450 of coded DCT coefficients 500 has the same number of coded DCT coefficients 500 as there are original luminance values 35. It should be understood that blocks containing sub-sampled chrominance values (not shown) can also be transformed in a similar manner.

For example, a discrete cosine transform of an 8 x 8 block 450 of sixty-four luminance values 35 would result in an 8 x 8 block 450 of sixty-four coded DCT coefficients 500. In the 8 x 8 block 450 of coded DCT coefficients 500, the DCT coefficients 500 are arranged such that the upper left corner coded DCT coefficient 500a is the DC coefficient, which represents the average intensity (brightness) for the block of 8 x 8 luminance values. On the top row next to the DC coefficient 500a are the horizontal frequency coefficients of the 8 x 8 block of luminance values. The horizontal frequency coefficients are arranged such that the lowest horizontal frequency coefficient (HF1) 500b is immediately spatially adjacent to the DC value 500a and the highest horizontal frequency coefficient (HF7) 500c is at the upper right corner of the 8 x 8 block of coded DCT coefficients. On the left column below the DC coefficient 500a are the vertical frequency coefficients of the 8 x 8 block of luminance values. The vertical frequency coefficients are arranged such that the lowest vertical frequency coefficient (VF1) 500d is immediately spatially adjacent to the DC coefficient 500a and the highest vertical frequency coefficient (VF7) 500e is at the lower left corner of the 8 x 8 block of coded DCT coefficients. All other frequency coefficients in the 8 x 8 block of luminance values are arranged in the 8 x 8 block of coded DCT coefficients such that the lowest frequency coefficient (DF1) 500f is spatially adjacent to the DC coefficient 500a and the highest frequency coefficient (DFN) 500g is at the lower right corner of the 8 x 8 block of coded DCT coefficients.

To produce a compressed image, at least one of the coded DCT coefficients 500 for each block 450 is selected and stored to represent the sensor values 30 within each block 450 of the original image. In the present invention, the selected coded DCT coefficients 500 varies depending on the application. However, in most applications, the selected coded DCT coefficients 500 would include the lower frequency coefficients (e.g., upper left portion of the 8 x 8 block of coded DCT coefficients) without the DC coefficient 500a. Since changes in lighting conditions and noise are reflected in the higher frequencies and in the DC coefficient 500a, a change in the higher frequency coefficients and DC coefficient 500a would not normally indicate an event, such as the presence of an intruder, within an image.

Therefore, in one embodiment, the coded DCT coefficients 500 used for comparison purposes are at least the lowest vertical frequency coefficient 500d and the lowest horizontal frequency coefficient 500b without the DC coefficient 500a. However, in other embodiments, the selected coded DCT coefficients 500 can include only the lower horizontal frequency coefficients or only the lower vertical frequency coefficients to detect changes in the horizontal or vertical directions only. Although the number of coded DCT coefficients 500 selected for comparison purposes can vary depending on the application, in many applications, the number of coded DCT coefficients 500 would be less than half of the total number of coded DCT coefficients 500 for storage space conservation, with the emphasis being on the lower frequency coefficients.

It should noted that the invention is not limited to the use of the DCT (JPEG compression) coefficients. Wavelet transform coefficients, such as those used in JPEG 2000 image compression, or other transform coefficients could also be used. For example, Fourier transform coefficients, Walsh transform coefficients, Hadamard transform coefficients, Haar transform coefficients or Slant transform coefficients can be used. Each of these transforms is discussed in Gonzalez and Woods, *Digital Image Processing*, Addison-Wesley Publishing Company, 1992, which is hereby incorporated by reference. Each transform method varies in terms of complexity, memory required, immunity to various artifacts and number of coefficients needed to robustly detect motion.

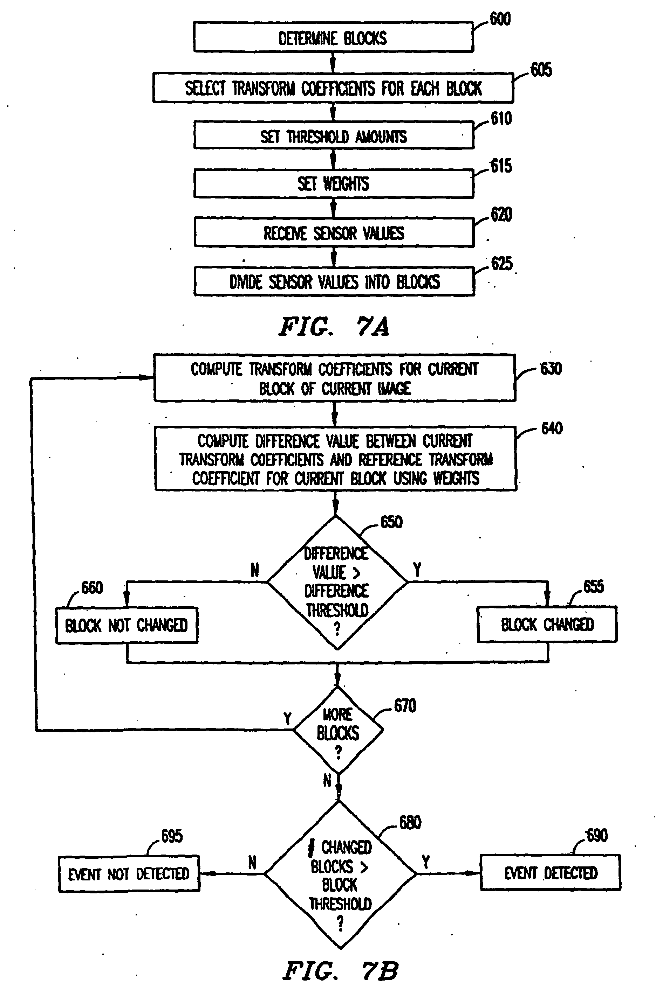

Turning now to FIGs. 7A and 7B, there is illustrated exemplary steps for event detection using blocks of sensor values. As shown in FIG. 7A, prior to processing an image for event detection, the blocks are determined (step 600) and the transform coefficients used for comparison purposes for each block are selected (step 605). Thereafter, the threshold amounts for event detection are set (step 610). The threshold amounts can include both a difference threshold amount to determine whether a particular block in the current image has changed significantly from the corresponding block in a previous reference image and a block threshold amount to determine the number of changed blocks required to detect an event. Once the threshold amounts are set, a weight can be determined for each transform coefficient (step 615) that will be used for comparison purposes in order to emphasize frequencies either vertically, horizontally, or diagonally. Thereafter, the sensor values for a current image are received (step 620) and partitioned into appropriate blocks (step 625).

Referring now to FIG. 7B, to process the image for event detection, the transform coefficients of a block of sensor values in an image are computed (step 630). For example, if x(k,l) denotes the values (luminance or sub-sampled chrominance), then X(r,c) denotes the (r,c)-th frequency coefficient. When using JPEG image compression, the value X(0,0) is the DC coefficient, which as discussed above, measures the average sensor value in the 8 x 8 block. Values X(0,1), X(1,0), and X(1,1) are the lowest AC frequency coefficients. As further discussed above, in many applications, event detection should not be sensitive to global luminance changes due to automatic gain control or varying lighting due to clouds, etc. Therefore, since the DCT of an 8 x 8 block is most sensitive to overall illumination in the DC coefficient, which is at frequency X(0,0), illumination-invariant event detection should not use the DC coefficient. Similarly, in many applications, event detection should not be sensitive to small fluctuations due to noise. Therefore, since noise fluctuations manifest themselves in the high-frequency coefficients of the 8 x 8 block of coded DCT coefficients, the high-frequency coefficients should not be used in robust event detection algorithms.

Using these rules, in one embodiment, a robust event detection algorithm compares the low-order transform coefficients to corresponding stored reference transform coefficients of the corresponding block in a previous reference image to determine whether a change indicative of an event has occurred. However, it should be understood that any of the transform coefficients can be selected for comparison purposes, depending upon the application. By comparing the transform coefficients, event detection can be performed without decompressing the stored reference.

For example, if C(r,c) and R(r,c) denote respectively the selected transform coefficients of corresponding blocks in the current and reference images, a difference value corresponding to a measure of change can be computed (step 640) as the following weighted sum:

$$D = \alpha_1|C(1,0) - R(1,0)| + \alpha_2|C(0,1) - R(0,1)| + \alpha_3|C(1,1) - R(1,1)|.$$

Here, the coefficients $\alpha_1, \alpha_2, \alpha_3$ are weights that can be adjusted to emphasize frequencies either vertically, horizontally, or diagonally. If the measured difference value D exceeds the difference threshold amount T (step 650), a significant change has occurred, and the entire block is labeled as a changed block (step 655). If the measured difference value D does not exceed the difference threshold amount (step 650), a significant change has not occurred, and the entire block is labeled as an unchanged block (step 660). This process is repeated for each block within the image (step 670).

Event detection occurs if the number of changed blocks exceeds the block threshold amount (steps 680 and 690). The block threshold amount can be predetermined based on the application of the video surveillance system, operator preference, the type of image sensor or the CFA being used or can be variable depending on the lighting conditions of the image much the same as the difference threshold amount. In addition, the video surveillance system can be configured to detect an event only if the changed blocks included in the number exceeding the block threshold amount are adjacent to each other or within a pre-determined number of blocks from each other to reduce false positives. If the number of changed blocks does not exceed the block threshold amount (step 680), no event is detected and an event notification is not transmitted to a monitoring center (step 695).

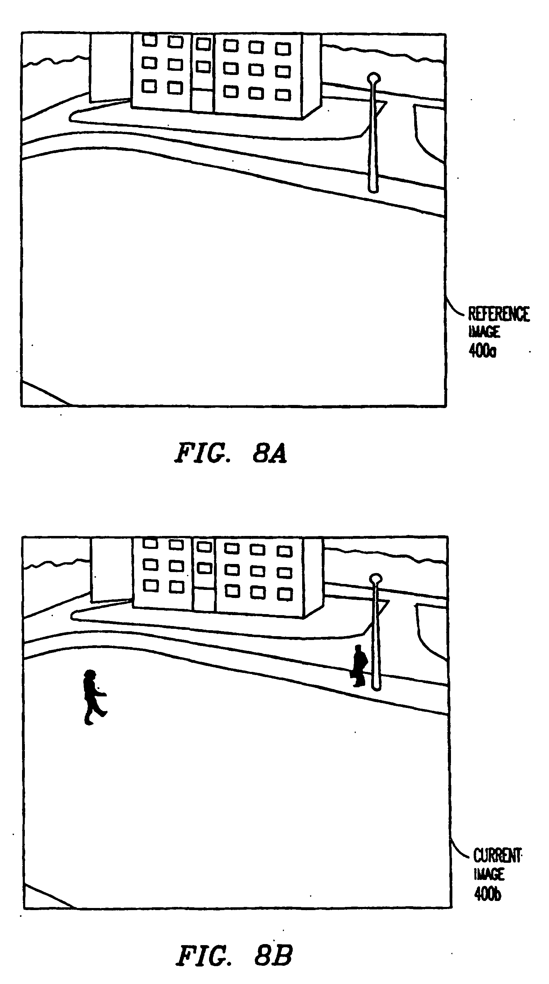

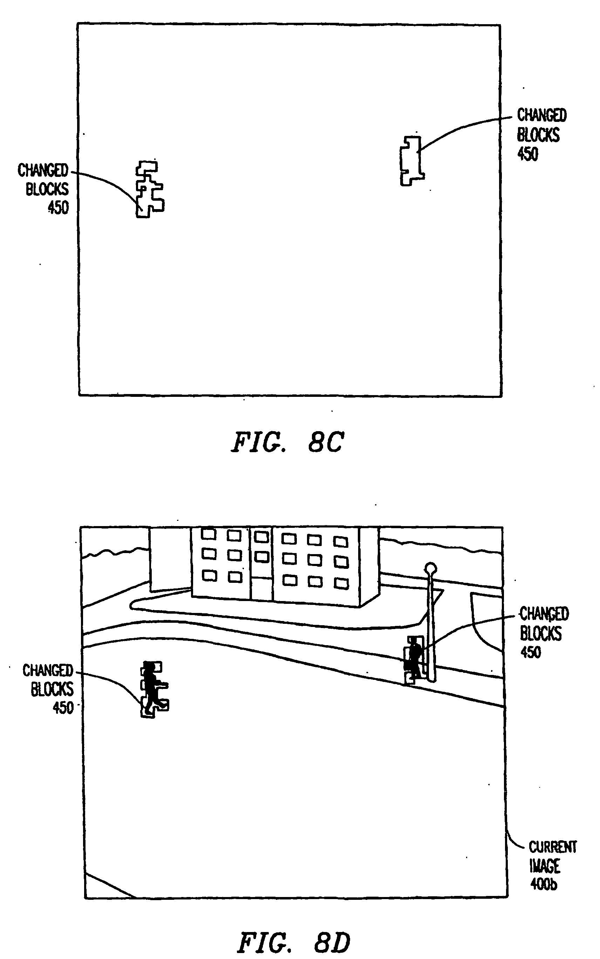

Exemplary views of a scene showing the detection of events using blocks of digital images of the scene are shown in FIGs. 8A-8D. FIG. 8A shows an exemplary reference image 400a of the scene for which only the JPEG compressed data is stored. FIG. 8B shows an exemplary current image 400b of the scene to be compressed into DCT coefficients for comparison with the DCT coefficients of the reference image. FIG. 8C shows exemplary changed blocks 450 where the difference value exceeds the difference threshold amount (D>T) and FIG. 8D shows the detected changed blocks 450 mapped to the current image 400b.

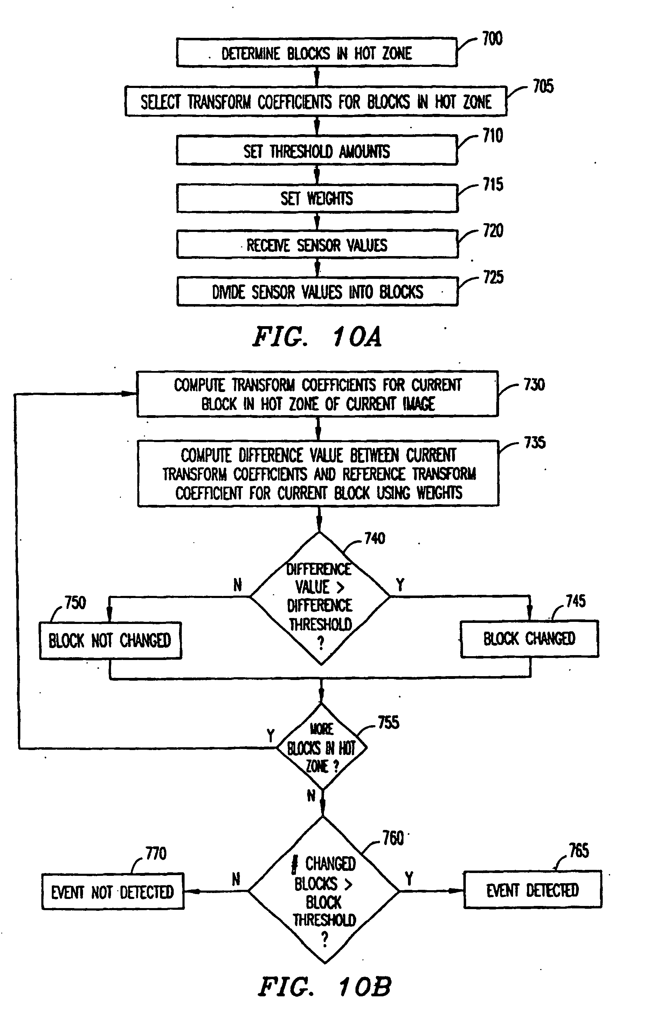

Referring now to FIG. 9, instead of storing and comparing the DCT coefficients for every block 450 in an image 400, a hot zone 420 or region of interest within an image 400 can be designated to reduce the amount of storage space required for the reference. As used below, the term hot zone 420 refers to a portion of a digital image 400 that is monitored for events. Blocks 450 of sensor values within the hot zone 420 of a current image 400 can be compared to corresponding blocks in a reference image for event detection. Blocks 450 of sensor values not within the hot zone 420 are not compared or stored. Thus, only the transform coefficients of the blocks 450 within the hot zone 420 are compared to the transform coefficients of the corresponding blocks of the reference image for event detection.

FIGs. 10A and 10B illustrate exemplary steps for detecting events using blocks in a hot zone of a digital image. As shown in FIG. 10A, prior to processing an image for event detection, the blocks within a hot zone specified by an operator of the video surveillance system are determined for use in detecting events in the current image (step 700). Thereafter, the transform coefficients used for comparison purposes for each block in the hot zone are selected (step 705) and the threshold amounts for event detection are set (step 710). The threshold amounts can include both a difference threshold amount to determine whether a particular block in the current image has changed significantly from the corresponding block in a previous reference image and a block threshold amount to determine the number of changed blocks required to detect an event. Once the threshold amounts are set, a weight can be determined for each transform coefficient (step 715) that will be used for comparison purposes in order to emphasize frequencies either vertically, horizontally, or diagonally. Thereafter, the sensor values for a current image are received (step 720) and partitioned into appropriate blocks (step 725).

Referring now to FIG. 10B, to process the image for event detection, the transform coefficients of a block of sensor values within the hot zone of the current image are computed (step 730), as discussed above in connection with FIG. 7B. Once the transform coefficients for the current hot zone block have been computed, the selected transform coefficients are compared to the corresponding stored reference transform coefficients of the corresponding block in the reference image to calculate a difference value between the current transform coefficients and the reference transform coefficients (step 735). If the measured difference value D exceeds the difference threshold amount T (step 740), a change indicative of an event has occurred, and the entire block is labeled as a changed block (step 745). If the measured difference value D does not exceed the difference threshold amount T (step 740), a significant change has not occurred, and the entire block is labeled as an unchanged block (step 750).

This process is repeated for each block within the hot zone of the image (step 755). Event detection occurs if the number of changed blocks within the hot zone exceeds the block threshold amount (steps 760 and 765). If the number of changed blocks does not exceed the block threshold amount (step 760), no event is detected and an event notification is not transmitted to a monitoring center (step 770).

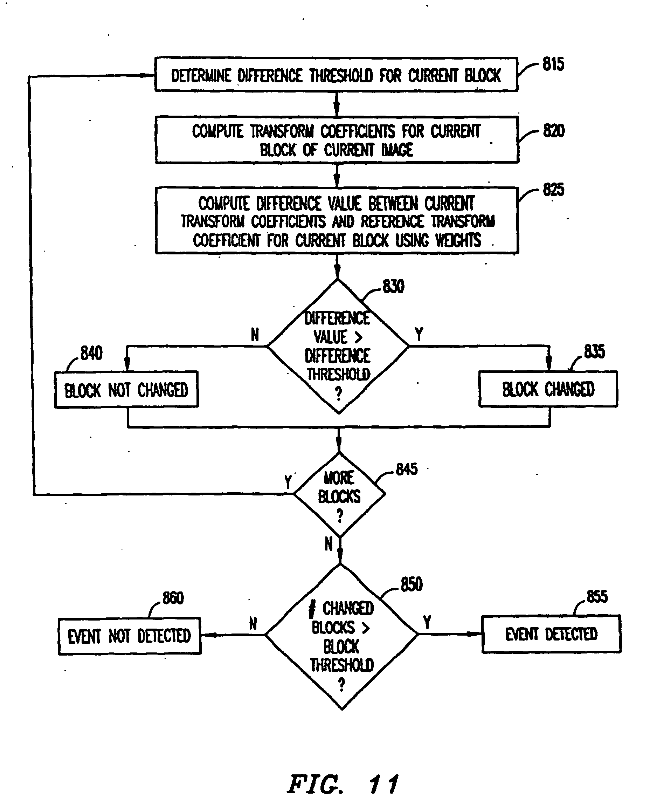

Referring now to the steps shown in FIG. 11, in addition to weighting particular transform coefficients, as described above in FIGs. 7 and 10, blocks in different areas of the image can be weighted differently in significance to allow for motion detection by varying thresholds, as is shown in FIG. 11. For example, the blocks covering less significant areas of an image can be weighted such that only large changes will result in the detection of an event, and the blocks covering more important areas of an image can be weighted such that smaller changes will result in the detection of an event.

Therefore, as illustrated in FIG. 11, once the sensor values for the current image are partitioned into blocks and the block threshold amount and transform coefficient weights are set, as described above in connection with FIGs. 7A and 10A, a difference threshold amount for a current block is set (step 815) to determine whether the current block in the current image has changed significantly from the corresponding block in the previous reference image. Thereafter, the transform coefficients of the current block of the current image can be computed (step 820), as discussed above in connection with FIG. 7B.

Once the transform coefficients for the current block have been computed, the selected transform coefficients are compared to the corresponding stored reference transform coefficients of the corresponding block in the reference image to calculate a difference value between the current transform coefficients and the reference transform coefficients (step 825). If the measured difference value D exceeds the difference threshold amount T set for the current block (step 830), a change indicative of an event has occurred, and the entire block is labeled as a changed block (step 835). If the measured difference value D does not exceed the difference threshold amount T for the current block (step 830), a significant change has not occurred, and the entire block is labeled as an unchanged block (step 840).

This process is repeated for each block within the image or within a hot zone of the image (step 845), as discussed above in connection with FIG. 10. Event detection occurs if the number of changed blocks within the image or hot zone exceeds the block threshold amount (steps 850 and 855). If the number of changed blocks does not exceed the block threshold amount (step 850), no event is detected and an event notification is not transmitted to a monitoring center (step 860).

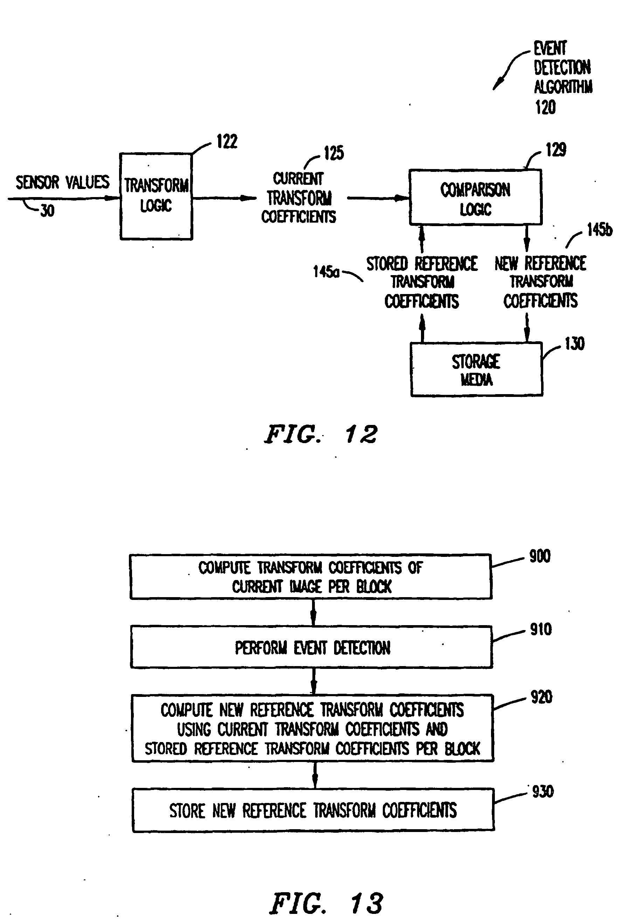

Referring now to FIG. 12, in further embodiments, the reference compared with the current image can be adapted to reflect gradual scene content changes. To facilitate the adaptation of the reference, the event detection algorithm 120 can further provide the current transform coefficients 125 calculated by the transform logic 122 from the sensor values 30 of the current image to calculation logic 129 capable of combining the stored reference transform coefficients 145a with the current transform coefficients 125 to produce new reference transform coefficients 145b. The new reference transform coefficients 145b can be stored in the storage medium 130 as the reference 140 for use in comparison with the next image in order to detect events.

The adaptation of the stored reference 140 should occur sufficiently slowly so as to not allow the adaptation of slow moving objects that would otherwise trigger an event. For example, the calculation logic 129 can combine the reference transform coefficients 145b with the current transform coefficients 125, as follows:

$$R_{new} = (1 - \lambda)C + \lambda R_{old}.$$

The above combination of the stored reference transform coefficients $R_{old}$ with the current transform coefficients $C$ to produce the new reference transform coefficients $R_{new}$ is a weighted average of all previous adapted images, with the weighting favoring the most recent. Therefore, with each new image, the older image data drops in significance.

The reference 140 can be adapted for all blocks within an image or for only certain blocks within an image that meet a certain criterion. For example, only the blocks that show inter-frame change below the difference threshold can be adapted. In other embodiments, the reference 140 can be adapted using all of the stored reference transform coefficients for a particular block or only certain stored reference transform coefficients based on operator-defined criterion or other parameters.

FIG. 13 illustrates exemplary steps for adapting the reference to account for gradual scene content changes. When the transform coefficients are computed for each block (step 900), the event detection process can begin (step 910), as described above in connection with FIGs. 7, 10 and 11. After the event detection process is completed, the stored reference transform coefficients for each block are combined with the corresponding current transform coefficients for the corresponding block of the current image to compute new reference transform coefficients (step 920). The new reference transform coefficients can then be stored for later use in detecting events in the next digital image (step 930).

As will be recognized by those skilled in the art, the innovative concepts described in the present application can be modified and varied over a wide range of applications. Accordingly, the scope of patented subject matter should not be limited to any of the specific exemplary teachings discussed, but is instead defined by the following claims.

**Claims**

1. An image processing system (100) for use in a video surveillance system (20), **characterized by**:

   a storage medium (130) for storing reference transform coefficients (145) representing at least a portion of a prior image; and
   a processor (110) for receiving sensor values (30) representing a current image and computing current transform coefficients (125) representing at least a portion of said current image, said current transform coefficients (125) spatially corresponding to said reference transform coefficients (145), said processor (110) further for performing a comparison of said current transform coefficients (125) with said reference transform coefficients (145) and detecting an event in said current image based upon said comparison;

   wherein said processor (110) is configured to perform said comparison by computing a difference between said current transform coefficients (125) and said reference transform coefficients (145) by assigning respective weights to at least one of said reference transform coefficients (145) and said corresponding current transform coefficients (125), and determining whether said difference exceeds a difference threshold amount (128), said processor (110) being configured to detect said event when said difference exceeds said threshold amount (128).

2. The image processing system of Claim 1, wherein said processor (110) is configured to compute said current transform coefficients (125) using a discrete cosine transform process and said current transform coefficients (125) and said reference transform coefficients (145) are low frequency ones of said discrete cosine transform coefficients excluding a DC one of said discrete cosine transform coefficients.

3. The image processing system of one of Claims 1 and 2, wherein said processor (110) is further configured to divide said current image into blocks (450), said current transform coefficients (125) being computed for each of said blocks (450), said comparison being performed between said current transform coefficients (125) and said reference transform coefficients (145) for each of said blocks (450).

4. The image processing system of Claim 3, wherein said processor (110) is further configured to perform said comparison by labeling each of said blocks (450) where said difference exceeds said difference threshold amount (128) a changed block, said processor (110) being further configured to detect said event when the number of said changed blocks exceeds a block threshold amount (128).

5. The image processing system of one of Claims 1 to 4, wherein said processor (110) is configured to compare said current transform coefficients (125) corresponding to a hot zone (420) of said current digital image with said reference transform coefficients (145), said hot zone (420) including only a portion of said sensor values (30) of said current image.

6. A method for detecting an event within a current image, **characterized by**:

computing (310) current transform coefficients (125) representing at least a portion of said current image; performing (320 and 330) a comparison of said current transform coefficients (125) with reference transform coefficients (145) representing at least a portion of a prior image, said current transform coefficients (125) spatially corresponding to said reference transform coefficients (145); and detecting (340) said event in said current image based upon said comparison;

wherein said performing said comparison further comprises:

computing (320) a difference between said current transform coefficients (125) and said reference transform coefficients (145) by assigning respective weights to at least one of said reference transform coefficients (145) and said corresponding current transform coefficients (125); and determining (330) whether said difference exceeds a difference threshold amount (128).

7. The method of Claim 6, wherein said computing (310) said current transform coefficients further comprises:

dividing (600) said current image into blocks (450); and computing (630) said current transform coefficients (125) for each of said blocks (450), said comparison being performed between said current transform coefficients (125) and said reference transform coefficients (145) for each of said blocks (450).

**Patentansprüche**

1. Bildverarbeitungssystem (100) zur Verwendung in einem Videoüberwachungssystem (20), **gekennzeichnet durch**:

ein Speichermedium (130) zum Speichern von Referenztransformationskoeffizienten (145), die zumindest einen Teil eines früheren Bildes wiedergeben, und einen Prozessor (110) zum Empfangen von Sensorwerten (30), die ein momentanes Bild wiedergeben, und zum Berechnen momentaner Transformationskoeffizienten (125), die zumindest einen Teil des momentanen Bildes wiedergeben, wobei die momentanen Transformationskoeffizienten (125) den Referenztransformationskoeffizienten (145) räumlich entsprechen, der Prozessor (110) des weiteren zur Durchführung eines Vergleichs der momentanen Transformationskoeffizienten (125) mit den Referenztransformationskoeffizienten (145) und zum Erfassen eines Ereignisses in dem momentanen Bild basierend auf dem Vergleich bestimmt ist, wobei der Prozessor (110) dazu eingerichtet ist, den Vergleich **durch** Berechnen einer Differenz zwischen den momentanen Transformationskoeffizienten (125) und den Referenztransformationskoeffizienten (145) **durch** Zuordnen entsprechender Gewichtungen zu zumindest einem der Referenztransformationskoeffizienten (145) und den entsprechenden momentanen Transformationskoeffizienten (125) und **durch** Bestimmen, ob die Differenz einen Differenzschwellwert (128) überschreitet, durchzuführen, und wobei der Prozessor (110) dazu eingerichtet ist, das Ereignis zu erfassen, wenn die Differenz den Schwellwert (128) übersteigt.

2. Bildverarbeitungssystem nach Anspruch 1, wobei der Prozessor (110) dazu eingerichtete ist, die momentanen Transformationskoeffizienten (125) unter Verwendung eines diskreten Kosinustransformationsprozesses zu berechnen und die momentanen Transformationskoeffizienten (125) und die Referenztransformationskoeffizienten (145) niederfrequente Koeffizienten der diskreten Kosinustransformationskoeffizienten sind, wobei ein DC-artiger Koeffizient der diskreten Kosinustransformationskoeffizienten ausgeschlossen ist.

3. Bildverarbeitungssystem nach einem der Ansprüche 1 und 2, wobei der Prozessor (110) des weiteren dazu eingerichtet ist, das momentane Bild in Blöcke (450) zu unterteilen, wobei die momentanen Transformationskoeffizienten (125) für jeden der Blökke (450) berechnet werden und der Vergleich zwischen den momentanen Transformationskoeffizienten (125) und den Referenztransformationskoeffizienten (145) für jeden der Blöcke (450) durchgeführt wird.

4. Bildverarbeitungssystem nach Anspruch 3, wobei der Prozessor (110) des weiteren dazu eingerichtet ist, den Vergleich durch Markieren jedes der Blöcke (450), bei dem die Differenz den Differenzschwellwert (128) übersteigt, als einen geänderten Block durchzuführen, wobei der Prozessor (110) des weiteren dazu eingerichtet ist, das Ereignis zu erfassen, wenn die Zahl der geänderten Blöcke einen Blockschwellwert (128) übersteigt.

5. Bildverarbeitungssystem nach einem der Ansprüche 1 bis 4, wobei der Prozessor (110) dazu eingerichtet ist, die momentanen Transformationskoeffizienten (125), die einer heißen Zone (420) des momentanen digitalen Bildes entsprechen, mit den Referenztransformationskoeffizienten (145) zu vergleichen, wobei die heiße Zone (420) lediglich einen Teil der Sensorwerte (30) des momentanen Bildes umfaßt.

6. Verfahren zum Erfassen eines Ereignisses in einem momentanen Bild, **gekennzeichnet durch**:

   Berechnen (310) momentaner Transformationskoeffizienten (125), die zumindest einen Teil des momentanen Bildes wiedergeben;
   Durchführen (320 und 330) eines Vergleichs der momentanen Transformationskoeffizienten (125) mit Referenztransformationskoeffizienten (145), die zumindest einen Teil eines früheren Bildes wiedergeben, wobei die momentanen Transformationskoeffizienten (125) den Referenztransformationskoeffizienten (145) räumlich entsprechen; und
   Erfassen (340) des Ereignisses im momentanen Bild basierend auf dem Vergleich, wobei das Durchführen des Vergleichs des weiteren umfaßt:

   Berechnen (320) einer Differenz zwischen den momentanen Transformationskoeffizienten (125) und den Referenztransformationskoeffizienten (145) **durch** Zuweisen entsprechender Gewichtungen zu zumindest einem der Referenztransformationskoeffizienten (145) und den entsprechenden momentanen Transformationskoeffizienten (125); und
   Bestimmen (330), ob die Differenz einen Differenzschwellwert (128) übersteigt.

7. Verfahren nach Anspruch 6, wobei das Berechnen (310) der momentanen Transformationskoeffizienten des weiteren umfaßt:

   Unterteilen (600) des momentanen Bildes in Blöcke (450) und
   Berechnen (630) der momentanen Transformationskoeffizienten (125) für jeden der Blöcke (450), wobei der Vergleich zwischen den momentanen Transformationskoeffizienten (125) und den Referenztransformationskoeffizienten (145) für jeden der Blökke (450) durchgeführt wird.

## Revendications

1. Système de traitement d'image (100) à utiliser dans un système de vidéosurveillance (20), **caractérisé par** :

   - un moyen de stockage (130) pour stocker des coefficients de transformation de référence (145) représentant au moins une partie d'une image antérieure ; et
   - un processeur (110) destiné à recevoir des valeurs de détecteur (30) représentant une image actuelle et calculer des coefficients de transformation actuels (125) représentant au moins une partie de ladite image actuelle, lesdits coefficients de transformation actuels (125) correspondant spatialement auxdits coefficients de transformation de référence (145), ledit processeur (110) étant en plus destiné à effectuer une comparaison desdits coefficients de transformation actuels (125) avec lesdits coefficients de transformation de référence (145) et à détecter un événement dans ladite image actuelle sur la base de ladite comparaison ;

   dans lequel ledit processeur (110) est configuré de façon à effectuer ladite comparaison en calculant une différence entre lesdits coefficients de transformation actuels (125) et lesdits coefficients de transformation de référence (145) en attribuant des poids respectifs à au moins un desdits coefficients de transformation de référence (145) et desdits coefficients de transformation actuels correspondants (125), et en déterminant si ladite différence dépasse une quantité de seuil de la différence (128), ledit processeur (110) étant configuré de façon à détecter ledit événement lorsque ladite différence dépasse ladite quantité de seuil (128).

2. Système de traitement d'image selon la revendication 1, dans lequel ledit processeur (110) est configuré de façon à calculer lesdits coefficients de transformation actuels (125) en utilisant un processus de transformation cosinusoïdale discrète et lesdits coefficients de transformation actuels (125) et lesdits coefficients de transformation de référence (145) sont des coefficients à basse fréquence desdits coefficients de transformation cosinusoïdale discrète excluant un coefficient à courant continu desdits coefficients de transformation cosinusoïdale discrète.

**3.** Système de traitement d'image selon l'une des revendications 1 et 2, dans lequel ledit processeur (110) est en outre configuré de façon à diviser ladite image actuelle en blocs (450), lesdits coefficients de transformation actuels (125) étant calculés pour chacun desdits blocs (450), ladite comparaison étant effectuée entre lesdits coefficients de transformation actuels (125) et lesdits coefficients de transformation de référence (145) pour chacun desdits blocs (450).

**4.** Système de traitement d'image selon la revendication 3, dans lequel ledit processeur (110) est en outre configuré de façon à effectuer ladite comparaison en étiquetant chacun desdits blocs (450) lorsque ladite différence dépasse ladite quantité de seuil de la différence (128) pour un bloc changé, ledit processeur (110) étant en outre configuré de façon à détecter ledit événement lorsque le nombre desdits blocs changés dépasse une quantité de seuil des blocs (128).

**5.** Système de traitement d'image selon l'une quelconque des revendications 1 à 4, dans lequel ledit processeur (110) est configuré de façon à comparer lesdits coefficients de transformation actuels (125) correspondant à une zone chaude (420) de ladite image numérique actuelle avec lesdits coefficients de transformation de référence (145), ladite zone chaude (420) comprenant uniquement une partie desdites valeurs de détecteur (30) de ladite image actuelle.

**6.** Procédé pour détecter un événement à l'intérieur d'une image actuelle, **caractérisé par** :

- le calcul (310) des coefficients de transformation actuels (125) représentant au moins une partie de ladite image actuelle ;
- l'exécution (320 et 330) d'une comparaison desdits coefficients de transformation actuels (125) avec des coefficients de transformation de référence (145) représentant au moins une partie d'une image antérieure, lesdits coefficients de transformation actuels (125) correspondant spatialement auxdits coefficients de transformation de référence (145) ; et
- la détection (340) dudit événement dans ladite image actuelle sur la base de ladite comparaison ;

   dans lequel l'exécution de ladite comparaison comprend en outre :

- le calcul (320) d'une différence entre lesdits coefficients de transformation actuels (125) et lesdits coefficients de transformation de référence (145) en attribuant des poids respectifs à au moins un desdits coefficients de transformation de référence (145) et desdits coefficients de transformation actuels correspondants (125) ; et
- le fait de déterminer (330) si ladite différence dépasse une quantité de seuil de la différence (128).

**7.** Procédé selon la revendication 6, dans lequel ledit calcul (310) desdits coefficients de transformation actuels comprend en outre :

- la division (600) de ladite image actuelle en blocs (450) ; et
- le calcul (630) desdits coefficients de transformation actuels (125) pour chacun desdits blocs (450), ladite comparaison étant effectuée entre lesdits coefficients de transformation actuels (125) et lesdits coefficients de transformation de référence (145) pour chacun desdits blocs (450).

MONITORING
CENTER
250

DATA  215

200

VIDEO
SURVEILLANCE
SYSTEM 20

255

SCENE
205

LINK
220

FIELD OF
VIEW 210

## FIG. 1

VIDEO
SURVEILLANCE
SYSTEM
10

PIXEL 25

IMAGE
PROCESSING
SYSTEM
100

EVENT
DETECTION
ALGORITHM  120

SENSOR VALUES
30

110

CPU

EVENT NOTIFICATION
40

140

REFERENCE

SENSOR 20

STORAGE MEDIA 130

## FIG. 2

**FIG. 3**

**FIG. 4**

FIG. 5

FIG. 9

8X8 BLOCK
450

SENSOR
VALUE
30

Y11  Y11  Y12  Y12 ················· Y14
Y21  Y11  Y22  Y12 ················· Y14
Y21
Y41

Y81                                        Y44

LOWEST DIAGONAL
FREQUENCY
500f

LOWEST HORIZONTAL
FREQUENCY 500b

BLOCK
450

LOWEST
VERTICAL
FREQUENCY
500d

500a

HIGHEST
HORIZONTAL
FREQUENCY
500c

DC    HF1    HF2 ················· HF7

VF1   DF1

DCT
TRANSFORM
COEFFICIENTS
500

VF2

HIGHEST
VERTICAL
FREQUENCY
500e

VF7

DFN

HIGHEST
FREQUENCY
500g

EP 1 416 734 B1

FIG. 6

**FIG. 7A**

Flowchart steps:
- DETERMINE BLOCKS — 600
- SELECT TRANSFORM COEFFICIENTS FOR EACH BLOCK — 605
- SET THRESHOLD AMOUNTS — 610
- SET WEIGHTS — 615
- RECEIVE SENSOR VALUES — 620
- DIVIDE SENSOR VALUES INTO BLOCKS — 625

**FIG. 7B**

Flowchart steps:
- COMPUTE TRANSFORM COEFFICIENTS FOR CURRENT BLOCK OF CURRENT IMAGE — 630
- COMPUTE DIFFERENCE VALUE BETWEEN CURRENT TRANSFORM COEFFICIENTS AND REFERENCE TRANSFORM COEFFICIENT FOR CURRENT BLOCK USING WEIGHTS — 640
- DIFFERENCE VALUE > DIFFERENCE THRESHOLD ? — 650
  - N → BLOCK NOT CHANGED — 660
  - Y → BLOCK CHANGED — 655
- MORE BLOCKS ? — 670
  - Y (loops back)
  - N
- # CHANGED BLOCKS > BLOCK THRESHOLD ? — 680
  - N → EVENT NOT DETECTED — 695
  - Y → EVENT DETECTED — 690

REFERENCE
IMAGE
400a

FIG. 8A

CURRENT
IMAGE
400b

FIG. 8B

CHANGED
BLOCKS
450

CHANGED
BLOCKS
450

**FIG. 8C**

CHANGED
BLOCKS
450

CHANGED
BLOCKS
450

CURRENT
IMAGE
400b

**FIG. 8D**

DETERMINE BLOCKS IN HOT ZONE — 700

SELECT TRANSFORM COEFFICIENTS FOR BLOCKS IN HOT ZONE — 705

SET THRESHOLD AMOUNTS — 710

SET WEIGHTS — 715

RECEIVE SENSOR VALUES — 720

DIVIDE SENSOR VALUES INTO BLOCKS — 725

*FIG. 10A*

COMPUTE TRANSFORM COEFFICIENTS FOR CURRENT BLOCK IN HOT ZONE OF CURRENT IMAGE — 730

COMPUTE DIFFERENCE VALUE BETWEEN CURRENT TRANSFORM COEFFICIENTS AND REFERENCE TRANSFORM COEFFICIENT FOR CURRENT BLOCK USING WEIGHTS — 735

740 — DIFFERENCE VALUE > DIFFERENCE THRESHOLD ?

N

750 — BLOCK NOT CHANGED

Y

BLOCK CHANGED — 745

755 — MORE BLOCKS IN HOT ZONE ?

Y

N

760 — # CHANGED BLOCKS > BLOCK THRESHOLD ?

N — EVENT NOT DETECTED — 770

Y — EVENT DETECTED — 765

*FIG. 10B*

DETERMINE DIFFERENCE THRESHOLD FOR CURRENT BLOCK — 815

COMPUTE TRANSFORM COEFFICIENTS FOR CURRENT BLOCK OF CURRENT IMAGE — 820

COMPUTE DIFFERENCE VALUE BETWEEN CURRENT TRANSFORM COEFFICIENTS AND REFERENCE TRANSFORM COEFFICIENT FOR CURRENT BLOCK USING WEIGHTS — 825

830

DIFFERENCE VALUE > DIFFERENCE THRESHOLD ?

N

Y

840

BLOCK NOT CHANGED

835

BLOCK CHANGED

MORE BLOCKS ? — 845

Y

N

850

# CHANGED BLOCKS > BLOCK THRESHOLD ?

N

Y

860

EVENT NOT DETECTED

855

EVENT DETECTED

*FIG. 11*

EP 1 416 734 B1

FIG. 12

FIG. 13